# EUROPÄISCHE PATENTSCHRIFT

(11) **EP 3 088 305 B1**
(45) Veröffentlichungstag und Bekanntmachung des Hinweises auf die Patenterteilung: **26.12.2018**
(21) Anmeldenummer: 15165193.2
(22) Anmeldetag: 27.04.2015
(51) Int. Cl.: B64F 1/305

(54) **VERFAHREN ZUR POSITIONIERUNG EINER ZUGANGS- ODER ZUFÜHREINRICHTUNG AN DEM RUMPF EINES FLUGZEUGS**
METHOD FOR POSITIONING AN ACCESS OR FEEDING DEVICE RELATIVE TO THE HULL OF AN AIRPLANE
PROCÉDÉ DE POSITIONNEMENT D'UN DISPOSITIF D'ALIMENTATION OU D'ACCÈS SUR LE FUSELAGE D'UN AVION

(43) Veröffentlichungstag der Anmeldung: 02.11.2016
(73) Patentinhaber: Hübner GmbH & Co. KG, 34123 Kassel (DE); Pepperl + Fuchs GmbH, 12277 Berlin (DE)
(72) Erfinder: Scharf, Lothar, 37242 Bad Soden-Allendorf (DE); Herwig, Rolf, 34253 Lohfelden (DE); Jaap, Holger, 21502 Geesthacht (DE); Tabel, Ernst, 21502 Hamburg (DE); Schroeder, Thorsten, 12621 Berlin (DE)
(74) Vertreter: Patentanwälte Walther Hinz Bayer PartGmbB

(56) Entgegenhaltungen:
- WO-A1-01/34467
- DE-A1-102011 101 418
- US-A1- 2007 214 585

## Beschreibung

Die Erfindung betrifft ein Verfahren zur Positionierung einer Zugangs- oder Zuführeinrichtung an dem Rumpf eines Flugzeugs nach dem Patentanspruch 1.

Dabei werden unter einer Zugangseinrichtung insbesondere Fluggasttreppen oder Fluggastbrücken verstanden, über die Passagiere ein Flugzeug betreten bzw. dieses verlassen können. Bei der Zuführeinrichtung kann es sich insbesondere auch um eine Einrichtung zum Beladen mit oder Entladen von Gegenständen wie z. B. Gepäck handeln. Beispielsweise kann es sich um ein Gepäckförderband, einen Hubwagen für Container oder ein Cateringfahrzeug handeln.

Fluggastreppen und Fluggastbrücken als Zugangseinrichtungen sind aus dem Stand der Technik hinreichend bekannt. Während Fluggasttreppen auf dem Rollfeld an das Flugzeug herangefahren werden, und die Passagiere insofern über das Rollfeld aus dem Flugzeug aus- bzw. in das Flugzeug einsteigen können, zeichnen sich Fluggastbrücken dadurch aus, dass durch Fluggastbrücken eine unmittelbare Verbindung zwischen dem Terminal einerseits und dem Flugzeug andererseits hergestellt wird. Insbesondere bei Fluggastbrücken oder auch anderen Zugangs- oder Zuführeinrichtungen stellt sich der Andockvorgang wie folgt dar: Die Fluggastbrücke weist einen Positionierantrieb mit einer Steuereinrichtung auf. Der Positionierantrieb sorgt für das Verfahren der Fluggastbrücke auf dem Rollfeld und auch für eine Verstellung der Fluggastbrücke in der Höhe relativ zum Rollfeld. Hat das Flugzeug die Parkposition eingenommen und soll die Fluggastbrücke an den Rumpf des Flugzeugs im Bereich einer Türöffnung herangefahren werden, dann erfolgt dies üblicherweise manuell durch entsprechendes in der Fluggastbrücke befindliches Bedienpersonal, wobei das Heranfahren der Fluggastbrücke an den Flugzeugrumpf z. B. manuell über einen Joystick erfolgt, der durch die Steuereinrichtung mit dem Positionierantrieb in Verbindung steht. Die Fluggastbrücke weist einen Sensor auf, der die Entfernung der Fluggastbrücke zum Flugzeug kontinuierlich misst. Wird während der Annäherung ein vorgegebener Abstandswert zwischen der Fluggastbrücke einerseits und dem Flugzeug andererseits unterschritten, dann wird die Geschwindigkeit für die Annäherung der Fluggastbrücke an das Flugzeug vermindert. Üblicherweise beträgt der Abstand, bei dem die Fluggastbrücke bei der Annäherung an den Rumpf des Flugzeugs in Schleichfahrt übergeht, etwa 2 m. Die Fluggastbrücke selbst weist ein Vordach mit einem umlaufenden Bumper auf, wobei an seiner Frontseite im Bereich des Bodens mindestens ein Endschalter angeordnet ist. Liegt der Bumper an dem Flugzeugrumpf an, wird der Endschalter aktiviert mit der Folge, dass durch diesen Endschalter die Steuereinrichtung des Positionierantriebes ein Steuersignal erhält, das den Positionierantrieb stillsetzt.

Während der Annäherung an das Flugzeug erfolgt gleichzeitig eine Ausrichtung der Höhe der Fluggastbrücke relativ zu der Türöffnung des Flugzeuges. Hierzu besitzt die Fluggastbrücke einen weiteren Sensor, der den Abstand der Fluggastbrücke zum Rollfeld bestimmt. Dieser Sensor steht ebenfalls mit der Steuereinrichtung des Positionierantriebes der Fluggastbrücke in Verbindung, sodass bei Erhalt von entsprechenden Sensorsignalen die Fluggastbrücke auf ein vorgegebenes Niveau angehoben oder abgesenkt wird.

Alternativ kann vorgesehen sein, dass dem Bedienpersonal der mit dem Sensor ermittelte momentane Abstand zum Rollfeld angezeigt wird und das Bedienpersonal hierauf entsprechend die Fluggastbrücke in der Höhe manuell ausrichten kann.

Liegt die Fluggastbrücke mit dem Vordach und dem stirnseitig angeordneten Bumper an dem Flugzeugrumpf im Bereich der Türöffnung des Flugzeuges an, dann ist es erforderlich, dass kontinuierlich die vertikale Relativbewegung des Flugzeugrumpfs gegenüber der Fluggastbrücke ermittelt wird, die beim Be- und Entladen des Flugzeuges auftritt. Hierzu dient nach dem Stand der Technik ein sogenannter Autoleveler. Der Autoleveler umfasst einen an der Fluggastbrücke angeordneten Hebel, der endseitig eine Andruckrolle oder -Walze aufweist, die an der Flugzeughaut im Bereich der Türöffnung anliegt. In der Andruckrolle sind Schalter untergebracht, die in Abhängigkeit der Anzahl der Umdrehungen der Rolle der Steuereinrichtung des Positionierantriebes der Fluggastbrücke Signale übersenden, die zum Absenken oder Anheben der Fluggastbrücke gegenüber dem Flugzeug führen, um Höhenunterschiede aufgrund der Relativbewegung auszugleichen.

Nachteilig bei der Verwendung eines Autolevelers ist insbesondere, dass es dann, wenn es zu einem plötzlichen Absacken des Flugzeuges kommt, nicht immer gewährleistet ist, dass die Walze an dem Flugzeugrumpf tatsächlich entlang rollt. Vielmehr besteht die Gefahr, dass die Walze oder Rolle an dem Flugzeugrumpf eine gleitende oder rutschende Bewegung ausführt. Eine gleitende Bewegung kann auch bei vereistem Rumpf des Flugzeugs auftreten. Nachteilig ist darüber hinaus, dass beim Andocken die Andockwalze oder -rolle die Flugzeughaut beschädigt. Insbesondere bei Carbonrümpfen ist diese Gefahr real. Die Folge von einer gleitenden oder rutschenden Bewegung ist, dass keiner der Schalter in der Rolle oder Walze aktiviert wird, mithin auch die Steuereinrichtung des Positionierantriebes für die Fluggastbrücke kein entsprechendes Signal zum Absenken oder Anheben der Fluggastbrücke erhält. Insofern besteht die Gefahr, dass das Flugzeug mit der nach außen ausgeschwenkten Tür des Flugzeuges auf dem Boden der Fluggastbrücke aufsetzt, und es hierbei zu Beschädigungen am Flugzeug und auch an der Fluggastbrücke kommt. Um dieses zu vermeiden, ist bekannt, zusätzlich zu dem Autoleveler noch einen sogenannten Sicherheitsschuh vorzusehen, der zwischen dem Boden der Fluggastbrücke einerseits und der Unterkante der Tür des Flugzeuges andererseits angeordnet ist. Erhält dieser Sicherheitsschuh Druck durch die Flugzeugtür, dann sorgt der Schuh durch ein entsprechendes Signal an die Steuereinrichtung des Positionierantriebes ebenfalls für ein Absenken der Fluggastbrücke.

Nachteilig an dem Schuh ist unter anderem, dass dieser für die Passagiere während des Ein- bzw. des Ausstiegs frei zugänglich ist. Es ist bereits vorgekommen, dass Passagiere mit dem Fuß auf den Sicherheitsschuh treten, was eine Belastung vortäuscht, die tatsächlich nicht vorhanden ist, und sich die Fluggastbrücke infolgedessen um mehrere Zentimeter ruckartig absenkt, wodurch Passagiere, die im Ein- oder Ausstieg begriffen sind, stürzen können. Weiter können durch diese unkontrollierte Bewegung die unter dem Boden der FGB befindlichen Pitot-Tubes des Flugzeuges abgerissen werden. Auch kommt es bei den heutigen Systemen zu Feuchtigkeitsproblemen, die zu Fehlschaltungen des Sicherheitsschuhs führen können.

Aus der WO 01/34467 A1 ist bekannt, für die Positionierung einer beweglichen Fluggastbrücke an eine Tür eines Flugzeugs einen Sensor mit einer Lichtquelle, welche elektromagnetische Strahlung in einer Abstrahlrichtung emittiert, und mit einem Detektor, welcher von einer Oberfläche des Flugzeugs reflektierte elektromagnetische Strahlung detektiert, zu verwenden. Dabei wird eine Laufzeit der elektromagnetischen Strahlung von der Lichtquelle zu dem Detektor ermittelt, anhand der auf den Abstand des Sensors zu dem Flugzeug in der Abstrahlrichtung geschlossen wird. Um verschiedene Punkte auf einer Oberfläche des Flugzeugs mit der elektromagnetischen Strahlung abtasten und so ein Linienprofil der Oberfläche ermitteln zu können, ist ein verschwenkbarer Spiegel vorgesehen, mit dem die Abstrahlrichtung der elektromagnetischen Strahlung variiert werden kann. Das so ermittelte Linienprofil wird zusammen mit in einem Computer hinterlegten Informationen zur Position der Tür an dem Flugzeug zur korrekten Positionierung der Fluggastbrücke an das Flugzeug im Bereich der Tür verwendet.

Das Dokument US 7,120,959 B2 offenbart ein Verfahren zur Positionierung einer beweglichen Fluggastbrücke an ein Flugzeug, bei dem mit einem an der Fluggastbrücke angeordneten Sensor ein Höhenunterschied zwischen dem Sensor und einer Oberkante des Flugzeugs ermittelt wird. Wenn der Abstand einer Türöffnung zu der Oberkante bekannt ist, kann in Abhängigkeit von dem ermittelten Höhenunterschied und dem bekannten Abstand der Türöffnung zu der Oberkante die Höhe der Fluggastbrücke an die Höhe der Türöffnung angepasst werden. Konkret wird in der US 7,120,959 B2 vorgeschlagen, einen Sensor zu verwenden, der eine Lichtquelle aufweist, die elektromagnetische Strahlung emittiert, wobei der Abstrahlwinkel der elektromagnetischen Strahlung variiert werden kann. Weiterhin weist der Sensor einen Detektor auf, der von der Oberfläche eines Flugzeugs reflektierte elektromagnetische Strahlung detektiert. Bei einer Variation des Abstrahlwinkels kann anhand des Intensitätsverlaufs der von dem Detektor detektierten reflektierten elektromagnetischen Strahlung ermittelt werden, bei welchem Abstrahlwinkel die elektromagnetische Strahlung über die Oberkante des Flugzeugs hinweg propagiert, womit auf den Höhenunterschied zwischen dem Sensor und der Oberkante des Flugzeugs geschlossen werden kann.

Aus dem Dokument DE 10 2011 101 418 A1 sind eine bewegliche Zugangs- oder Zuführeinrichtung für ein Flugzeug sowie ein Verfahren zur Positionierung einer solchen an dem Rumpf eines Flugzeugs bekannt, bei denen ein einziger Scanner vorgesehen ist, mit welchem in bestimmten zeitlichen Abständen eine Position der Zugangs- oder Zuführeinrichtung relativ zu dem Rumpf des Flugzeugs ermittelt wird. Die mit dem Scanner ermittelte Position wird zur Steuerung eines Positionierantriebs verwendet, um die Zugangs- oder Zuführeinrichtung relativ zu dem Rumpf des Flugzeugs auszurichten. Für die Ausrichtung beim Annähern an das Flugzeug wird mit dem Scanner einerseits der Abstand der Zugangs- oder Zuführeinrichtung von dem Rumpf des Flugzeugs ermittelt, wobei in Abhängigkeit von dem Abstand z. B. die Geschwindigkeit der Annäherung gesteuert werden kann. Andererseits wird mit dem Scanner seine Höhe über dem Rollfeld ermittelt, wobei die Zugangs- oder Zuführeinrichtung in Abhängigkeit von der ermittelten Höhe auf einen vorgegebenen Wert angehoben oder abgesenkt wird. Wenn die Zugangs- oder Zuführeinrichtung an dem Rumpf anliegt, wird durch Abtasten einer Vielzahl von Punkten auf dem Rumpf ein Linienprofil des Rumpfs ermittelt. Das ermittelte Profil wird in einer mit dem Scanner verbundenen Rechnereinheit mit einem zuvor ermittelten Linienprofil des Rumpfs verglichen. Wenn eine Abweichung vorliegt, welche darauf hindeutet, dass in vertikaler Richtung eine Relativbewegung der Zugangs- oder Zuführeinrichtung gegenüber dem Rumpf erfolgt ist, generiert die Rechnereinheit ein Signal zum Anheben oder Absenken der Zugangs- oder Zuführeinrichtung, um den mit der Relativbewegung verbundenen Höhenunterschied auszugleichen. Mit einem einzelnen Scanner lässt sich die Position des Flugzeugrumpfes nicht genau genug bestimmen, sodass eine zuverlässige Positionierung der z. B. Zugangseinrichtung nicht möglich ist. Da der Scanner am rumpfseitigen Ende der Zugangseinrichtung befestigt ist, ist ein sehr großer Scanwinkel zur Erfassung des gesamten Flugzeugrumpfes erforderlich. Um die Kontur des Flugzeugrumpfes zu bestimmen, sind viele Messungen mit einer geringen Drehwinkeländerung des Scanners erforderlich. Durch den großen Scanbereich (180°) und die kleine Winkelauflösung ist eine hohe Anzahl von Messungen erforderlich. Dadurch vergrößert sich die Messzeit erheblich und eine schnelle Positionsnachführung der Zugangseinrichtung bei plötzlichen Positionsänderungen des Flugzeugrumpfes ist nicht möglich.

Die der Erfindung zugrunde liegende Aufgabe besteht demzufolge darin, bei einer Zugangs- oder Zuführeinrichtung diesbzgl. Abhilfe zu schaffen. Insbesondere soll die Zugangs- oder Zuführeinrichtung preiswerter herstellbar sein und die Fehlerquellen durch die Vielzahl an Sensoren bei mechanischen Lösungen mit Autoleveler und Sicherheitsschuh reduziert werden, sowie die Zuverlässigkeit und Genauigkeit der Positionierung gegenüber Vorrichtungen mit lediglich einem Scanner erheblich verbessert werden. Die bekannten Systeme sind nicht im Einsatz, da sie zu ungenau arbeiten, was gefährlich ist. Sie sind also nicht praxistauglich.

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen zu entnehmen.

Das erfindungsgemäße Verfahren zeichnet sich insofern im Wesentlichen dadurch aus, dass zunächst eine Referenzposition der Zugangs- oder Zuführeinrichtung mithilfe der mindestens zwei zueinander und beabstandet übereinander angeordneten Mehrkanalscanner im angedockten Zustand der Zugangs- und Zuführeinrichtung bestimmt wird. Alsdann wird durch die Mehrkanalscanner in bestimmten zeitlichen Abständen die jeweils momentane Position des Flugzeugrumpfes relativ zur Zugangs- oder Zuführeinrichtung ermittelt. In einer Rechnereinheit wird diese momentane Position mit der Referenzposition verglichen. Treten Abweichungen auf, dann wird durch die Rechnereinheit ein Signal an die Steuerung des Positionierantriebes zur Justierung der Zugangs- oder Zuführeinrichtung übermittelt. Bei der momentanen Positionsbestimmung werden nun erfindungsgemäß die Licht-Sendeeinheiten der Mehrkanalscanner abgeschaltet, deren Lichtstrahlen den Flugzeugrumpf nicht treffen. Der Vorteil dieser Maßnahme besteht darin, dass sofern einige Licht-Sendeeinheiten abgeschaltet werden, die Rechnereinheit eine höhere Kapazität zur Durchführung einer Mehrzahl von Rechenzyklen zur Verfügung hat, wodurch die Genauigkeit der Positionsbestimmung der Zugangs- oder Zuführeinrichtung am Flugzeugrumpf erhöht wird. Insbesonder wenn die Rechnereinheit eine zweite CPU aufweist, hat dies zur Folge, dass auf den Sicherheitsschuh und den Autoleveler verzichtet werden kann.

Oder anders ausgedrückt bedeutet dies, dass sich eine Reduktion der Messzeit durch das Ausblenden von Lichtstrahlen einzelner Licht-Sendeeinheiten ergibt, die den Flugzeugrumpf nicht treffen und somit keinen Detektor erreichen. Das heißt, dass bei einem Mehrkanalscanner, der mehrere Licht-Sendeeinheiten und einen Detektor besitzt, die Licht-Sendeeinheiten, zu denen der Detektor kein Empfangssignal erhält, nicht aktiviert werden. Der somit verringerte Abtastbereich am Flugzeugrumpf kann schneller abgetastet werden, was zu einer Verkürzung der Messzeit führt. Das wiederum ermöglicht bei gleichbleibender Messzeit den verringerten Abtastbereich mehrfach abzutasten, was zu einer Erhöhung der Genauigkeit bei der Positionsbestimmung des Flugzeugrumpfes relativ zur Zugangs- oder Zuführeinrichtung führt. Durch die Verkürzung der Messzeit verkürzt sich auch die Reaktionszeit zur Steuerung des Schnellablasses, was den Sicherheitsschuh ebenfalls überflüssig macht.

Im Einzelnen wird hierbei so vorgegangen, dass in bestimmten zeitlichen Abständen die letzte der obersten oder untersten Licht-Sendeeinheit des oberen und/oder unteren Mehrkanalscanners, von der der mindestens eine Detektor ein Eingangssignal erhält, nachfolgende Licht-Sendeeinheit eingeschaltet wird, wobei dann, wenn von dieser nachfolgenden Licht-Sendeeinheit der mindestens eine Detektor ein Eingangssignal erhält, wiederum die jeweils nachfolgende Licht-Sendeeinheit eingeschaltet wird. Hieraus wird deutlich, dass der beispielsweise am oberen Ende der Zugangs- oder Zuführeinrichtung montierte Mehrkanalscanner, der mehrere Licht-Sendeeinheiten und einen Detektor aufweist, beginnend mit der untersten Licht-Sendeeinheit alle anderen nachfolgenden sich darüber befindlichen Licht-Sendeeinheiten durchgeschaltet werden, bis zu der Licht-Sendeeinheit, von der der Detektor kein Empfangssignal erhält. Gleiches gilt entsprechend auch für den am unteren Ende der Zugangs- oder Zuführeinrichtung angeordneten Mehrkanalscanner. Denkbar ist auch die Verwendung von Scannern mit einer Licht-Sendeeinheit und mehreren Detektoren, sowie mehreren Licht-Sendeeinheiten und mehreren Detektoren. Dies deshalb, weil in Bezug auf die reflektierten Strahlen die Detektoren abgefragt werden.

Mehrkanalscanner arbeiten im Gegensatz zu Scannern mit rotierendem Messkopf statisch, sodass kein Verschleiß an bewegten Teilen auftritt. Derartige Mehrkanalscanner haben insofern eine höhere Lebensdauer und sind aufgrund des einfacheren Aufbaus auch deutlich preisgünstiger. Solche Mehrkanalscanner mit mehreren Licht-Sendeeinheiten und einem Detektor als Empfangseinheit werden im zeitlichen Multiplex betrieben. Durch die Anzahl der Licht-Sendeeinheiten und deren Anordnung im Mehrkanalscanner wird der jeweilige Teilbereich des gesamten Abtastbereiches und die räumliche Auflösung des Abtastbereiches festgelegt. Das heißt, dass ein solcher Mehrkanalscanner einander überlappende Bereiche des Flugzeugrumpfes mithilfe der Licht-Sendeeinheiten und des mindestens einen Detektors zur Positionsbestimmung abtastet, sodass die Position einzelne Abtastbereiche in unterschiedlichen Perspektiven vermessen kann, um so die Genauigkeit der Positionsbestimmung zu erhöhen. Vorteilhaft hierbei ist auch, dass ein solches System redundant ist. Das heißt, dass das System funktionsfähig ist, selbst wenn einzelne Licht-Sendeeinheiten ausfallen würden. Es besteht allerdings nicht nur die Möglichkeit, die einzelnen Licht-Sendeeinheiten überlappend den Flugzeugrumpf umfassen zu lassen, vielmehr werden durch die vertikale Anordnung der mindestens zwei Mehrkanalscanner ebenfalls die Abtastbereiche oder zumindest Teile der Abtastbereiche überlappend erfasst. Im Überlappungsbereich liegen somit die Messdaten von den mindestens zwei Scannern ebenfalls redundant vor, sodass eine Korrektur der Messdaten in der Rechnereinheit möglich ist. Auch dies ermöglicht den Verzicht auf Sicherheitsschuh und Autoleveler. Bei der Verwendung von mehreren Scannern ist ein Scannbereich von 90° für jeden Scanner ausreichend, es können allerdings auch größere oder kleinere Scannbereiche zur Positionsbestimmung verwendet werden.

Eine geringe räumliche Auflösung ist zur Positionsbestimmung des Flugzeugrumpfes ausreichend, da der am weitesten oben angeordnete mindestens eine erste Mehrkanalscanner den Bereich des Flugzeugrumpfes mit der größten Krümmung misst. Entsprechendes gilt für den mindestens einen zweiten am weitesten unten angeordneten Mehrkanaiscanner. Durch die Verwendung mindestens zweier Mehrkanalscanner gegenüber lediglich einem einzigen Scanner reduziert sich auch die Messzeit. Dies deshalb, weil jeder der Mehrkanalscanner lediglich einen kleineren Abtastbereich mit einer größeren räumlichen Auflösung überstreicht, sodass gegenüber einem Verfahren mit lediglich einem Mehrkanalscanner eine geringere Anzahl von Messungen erforderlich ist, um die Position des Flugzeugrumpfes bestimmen zu können. Zusätzlich können die Mehrkanalscanner parallel messen, was die Messzeit ebenfalls deutlich verkürzt. Das heißt, dass alle Positionsänderungen des Flugzeugrumpfes im Wesentlichen sofort erkannt werden, und durch die Steuerung die Zugangs- oder Zuführeinrichtung entsprechend neu positioniert werden kann.

Geht man davon aus, dass einige der Licht-Sendeeinheiten abgeschaltet sind, so ist erforderlich, dass in bestimmten zeitlichen Abständen überprüft wird, ob die abgeschalteten Licht-Sendeeinheiten sich aufgrund der Bewegung des Flugzeugs relativ zur Fluggasttreppe oder Fluggastbrücke wieder in einer Position befinden, bei der die ausgesandten Strahlen auf den Flugzeugrumpf treffen. Insofern ist vorgesehen, dass in bestimmten zeitlichen Abständen, die der obersten oder untersten Licht-Sendeeinheit des oberen oder unteren Mehrkanalscanners, von der der mindestens eine Detektor ein Eingangssignal erhält, nachfolgende Licht-Sendeeinheit eingeschaltet wird. Wenn von dieser ersten nachfolgenden Licht-Sendeeinheit der mindestens eine Detektor ein Eingangssignal erhält, wird wiederum die nächst nachfolgende Licht-Sendeeinheit eingeschaltet. Das heißt, es wird in bestimmten zeitlichen Abständen überprüft, von welchen der zunächst abgeschalteten Licht-Sendeeinheiten ein Signal empfangen wird, wenn diese zur Überprüfung eingeschaltet werden.

Unbeanspruchter Gegenstand der Anmeldung ist zudem eine Vorrichtung zur Positionierung einer Zugangs- oder Zuführeinrichtung an dem Rumpf eines Flugzeugs beim Be- und Entladevorgang , wobei die Zugangs- oder Zuführeinrichtung einen Positionierantrieb mit einer Steuerung umfasst, wobei die Zugangs- oder Zuführeinrichtung dem Flugzeugrumpf zugerichtet eine Einrichtung mit mindestens zwei zueinander beabstandet übereinander angeordneten Mehrkanalscannern mit mehreren Licht-Sendeeinheiten und mindestens einem Detektor aufweist, die mit einer Rechnereinheit in Verbindung stehen, wobei die Vorrichtung eine Einrichtung mit mindestens zwei Mehrkanalscannern und die Rechnereinheit aufweist, die als eine an die Zugangs- oder Zuführeinrichtung montierbare Einheit ausgebildet ist. Hieraus wird deutlich, dass eine solche Einrichtung auch als Nachrüstsatz an bestehende Fluggasttreppen oder -brücken im Bereich ihrer jeweiligen Stirnseite angebracht werden kann.
Anhand der Zeichnungen wird die Erfindung nachstehend beispielhaft näher erläutert.
- Fig. 1a bis 1c: zeigen schematisch die Anordnung mehrerer Mehrkanalscanner an der Stirnseite der Fluggastbrücke, wobei unter Fig. 1a die Referenzposition des Flugzeugs relativ zur Fluggastbrücke ermittelt wird, unter 1b der Zustand dargestellt wird, wenn sich das Flugzeug relativ zur Fluggastbrücke absenkt, und unter 1c sich das Flugzeug relativ zur Fluggastbrücke anhebt;
- Fig. 2: zeigt schematisch den Mehrkanalscanner.

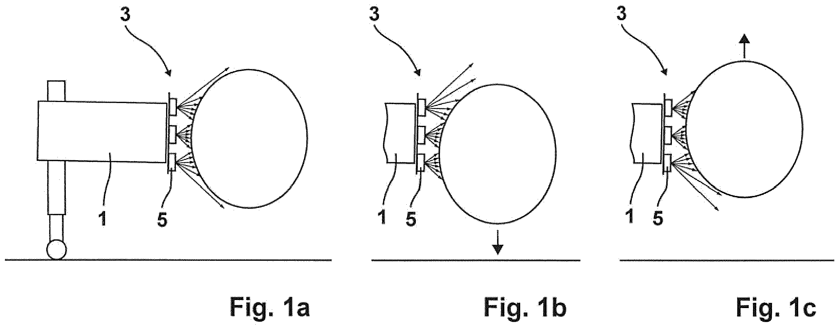

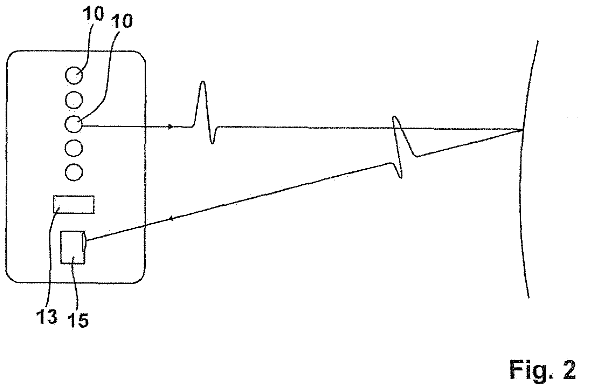

Gemäß den Figuren 1a bis 1c ist die Fluggastbrücke mit 1 bezeichnet. Am stirnseitigen Ende der Fluggastbrücke befindet sich die Einrichtung 3 als Teil der Vorrichtung zur Positionierung der Fluggastbrücke an dem Rumpf des Flugzeuges, wobei die Einrichtung im vorliegenden Fall drei übereinander angeordnete Mehrkanalscanner 5 umfasst, die mit einer Rechnereinheit (nicht dargestellt) in Verbindung stehen. Die Rechnereinheit und die Mehrkanalscanner bilden eine Einheit, die als solche an der Stirnseite der Fluggastbrücke oder -treppe angeordnet werden kann. Die drei Mehrkanalscanner 5 senden jeweils durch ihre ebenfalls übereinander angeordneten Licht-Sendeeinheiten 10 (Fig. 2) Strahlen aus, die entweder vom Flugzeugrumpf reflektiert werden oder am Flugzeugrumpf vorbeigehen, wie dies anschaulich in den Fig. 1a bis 1c zu entnehmen ist. Die vom Flugzeugrumpf reflektierten Strahlen werden durch den Detektor 15 des Mehrkanalscanners empfangen, und von der Rechnereinheit (nicht dargestellt) verarbeitet. Die Verarbeitung durch die Rechnereinheit erfolgt in der Weise, dass zunächst die Referenzposition der Fluggastbrücke relativ zum Flugzeugrumpf ermittelt wird, wobei ausgehend von dieser Referenzposition, wie in den Figuren 1b und 1c dargestellt, bei der entsprechenden Aufwärts- bzw. Abwärtsbewegung des Flugzeugrumpfes eine Neuausrichtung der Fluggastbrücke zum Flugzeugrumpf erfolgt.

In der Fig. 2 ist schematisch ein Mehrkanalscanner 5 dargestellt. Dieser Mehrkanalscanner 5 umfasst eine Mehrzahl von übereinander angeordneten Licht-Sendeeinheiten 10, eine sogenannten Messlogik 13 und einen Detektor 15 zum Empfangen der vom Flugzeugrumpf reflektierten Strahlung. Die Licht-Sendeeinheiten senden kurze Impulse aus, die vom Rumpf des Flugzeugs reflektiert werden und von dem Detektor empfangen werden. Aus der Zeitdauer zwischen dem Aussenden des Lichtstrahls und dem Empfangen des Lichtstrahls wird die genaue Entfernung zum Rumpf des Flugzeugs ermittelt, und über die Vielzahl der Licht-Sendeeinheiten schlussendlich ermittelt, wie die momentane Position des Flugzeugrumpfes relativ zur Fluggastbrücke ist.

### Bezugszeichenliste:

- 1: Fluggastbrücke
- 3: Einrichtung mit mehreren Mehrkanalscannern und einer Rechnereinheit
- 5: Mehrkanalscanner
- 10: Licht-Sendeeinheit
- 13: Messlogik
- 15: Detektor

## Patentansprüche

1. Verfahren zur Positionierung einer Zugangs- oder Zuführeinrichtung an dem Rumpf eines Flugzeugs beim Be- oder Entladevorgang, wobei die Zugangs- oder Zuführeinrichtung einen Positionierantrieb mit einer Steuerung umfasst, wobei die Zugangs- oder Zuführeinrichtung dem Flugzeugrumpf zugerichtet mindestens zwei zueinander beabstandet übereinander angeordnete Mehrkanalscanner (5) mit mehreren Licht-Sendeeinheiten (10) und mindestens einem Detektor (15) aufweist, umfassend folgende Verfahrensschritte:
Ermittlung einer Referenzposition der Zugangs- oder Zuführeinrichtung mithilfe der beiden Mehrkanalscanner (5) im angedockten Zustand der Zugangs- oder Zuführeinrichtung,
wobei nach Erreichen der Referenzposition durch die Mehrkanalscanner (5) in bestimmten zeitlichen Abständen die momentane Position des Flugzeugrumpfes relativ zur Zugangs- oder Zuführeinrichtung ermittelt wird,
wobei diese Position mit der Referenzposition durch mindestens eine Rechnereinheit verglichen wird,
wobei bei Feststellen einer Abweichung durch die Rechnereinheit ein Signal an die Steuerung des Positionierantriebes zur Nachjustierung der Zugangs- oder Zuführeinrichtung übermittelt wird,
wobei zur momentanen Positionsbestimmung die Licht-Sendeeinheiten (10) der Mehrkanalscanner (5) abgeschaltet werden, deren Lichtstrahlen den Flugzeugrumpf nicht treffen.

2. Verfahren nach Anspruch 1,
**dadurch gekennzeichnet,**
**dass** die Mehrkanalscanner (5) einander überlappende Bereiche des Flugzeugrumpfes mithilfe der Licht-Sendeeinheiten (10) und des mindestens einen Detektors (15) zur Positionsbestimmung abtasten, sodass die Position einzelner Abtastbereiche in unterschiedlichen Perspektiven vermessen werden kann, um so die Genauigkeit der Positionsbestimmung zu erhöhen.

3. Verfahren nach Anspruch 1 oder 2,
**dadurch gekennzeichnet,**
**dass** durch die Rechnereinheit im angedockten Zustand am Flugzeug zunächst alle Licht-Sendeeinheiten (10) der Mehrkanalscanner (5) aktiviert werden, wobei die erste Licht-Sendeeinheit (10) zu dessen Ausgangssignal durch den Detektor (15) kein Eingangssignal ermittelt wird, ebenso abgeschaltet wird, wie die darüber befindliche Licht-Sendeeinheit (10) des oberen oder die darunter befindliche Licht-Sendeeinheit (10) des unteren Mehrkanalscanners (5) abgeschaltet werden.

4. Verfahren nach einem der voranstehenden Ansprüche,
**dadurch gekennzeichnet,**
**dass** in bestimmten zeitlichen Abständen die letzte, der der obersten oder untersten Licht-Sendeeinheit (10) des oberen oder unteren Mehrkanalscanners (5), von der der mindestens eine Detektor (15) ein Eingangssignal erhält, nachfolgende Licht-Sendeeinheit (10) eingeschaltet wird, wobei dann, wenn von dieser nachfolgenden Licht-Sendeeinheit (10) der mindestens eine Detektor (15) ein Eingangssignal erhält, wiederum die jeweils nachfolgende Licht-Sendeeinheit (10) eingeschaltet wird.

5. Verfahren nach einem der voranstehenden Ansprüche,
**dadurch gekennzeichnet,**
**dass** zur Ermittlung der Referenzposition sämtliche Licht-Sendeeinheiten (10) und der mindestens eine Detektor (15) der mindestens zwei Mehrkanalscanner (5) aktiv sind.

## Claims

1. A method for positioning an access or loading assembly against the fuselage of an aircraft during the loading or unloading process, wherein the access or loading assembly comprises a positioning drive with a control system, wherein the access or loading assembly features at least two multichannel scanners (5) oriented toward the aircraft fuselage and disposed above one another at a distance from each other, with several light emitting units (10) and at least one detector (15), comprising the following method steps:
determining a reference position of the access or loading assembly in the docked state of the access or loading assembly by means of the two multichannel scanners (5),
wherein after obtaining the reference position, the current position of the aircraft fuselage relative to the access or loading assembly is determined at determined time intervals by the multichannel scanners (5),
wherein this position is compared with the reference position by at least one computer unit,
wherein if a deviation is discovered by the computer unit, a signal is transmitted to the control system of the positioning drive for realigning the access or loading assembly,
wherein the light emitting units (10) of the multichannel scanners (5) whose light beams do not hit the aircraft fuselage are switched off for the current position determination process.

2. The method according to claim 1,
**characterized in that**
for position determination, the multichannel scanners (5) scan overlapping areas of the aircraft fuselage by means of the light emitting units (10) and the at least one detector (15), so that the position of discrete scanning areas can be measured from different perspectives in order to increase the precision of the position determination process.

3. The method according to claim 1 or 2,
**characterized in that**
when docked at the aircraft, the computer unit first activates all the light emitting units (10) of the multichannel scanners (5), wherein the first light emitting unit (10), whose output signal is not detected as an input signal by the detector (15), is switched off, as well as the light emitting unit (10) of the upper multichannel scanner (5) located above it or the light emitting unit (10) of the bottom multichannel scanner (5) located below it.

4. The method according to one of the afore-mentioned claims,
**characterized in that**
at certain time intervals, the last of the uppermost or bottommost light emitting units (10) of the upper or bottom multichannel scanner (5) from which the at least one detector (15) receives an input signal, switches on subsequent light emitting unit (10), wherein when the at least one detector (15) receives an input signal from this subsequent light emitting unit (10), the respectively subsequent light emitting unit (10) is, in turn, switched on.

5. The method according to one of the afore-mentioned claims,
**characterized in that**
in order to determine the reference position, all the light emitting units (10) and the at least one detector (15) of the at least two multichannel scanners (5) are activated.

## Revendications

1. Procédé de positionnement d'un équipement d'accès ou d'acheminement au niveau du fuselage d'un avion lors du processus de chargement et de déchargement, l'équipement d'accès ou d'acheminement comprenant un entraînement de positionnement avec une commande, l'équipement d'accès ou d'acheminement comportant au moins deux scanners multicanaux (5), orientés vers le fuselage de l'avion et disposés de manière superposée à distance les uns des autres, avec plusieurs unités émettrices de lumière (10) et au moins un détecteur (15), comprenant les étapes suivantes consistant à :
déterminer une position de référence de l'équipement d'accès ou d'acheminement au moyen des deux scanners multicanaux (5) lorsque l'équipement d'accès ou d'acheminement est à l'état amarré,
où une fois la position de référence atteinte, la position momentanée du fuselage de l'avion par rapport à l'équipement d'accès ou d'acheminement est déterminée à des intervalles de temps déterminés au moyen des scanners multicanaux (5),
où cette position est comparée avec la position de référence par au moins une unité de traitement,
où lorsqu'une déviation est constatée par l'unité de traitement, un signal est transmis à la commande de l'entraînement de positionnement pour ajuster l'équipement d'accès ou d'acheminement,
où les unités émettrices de lumière (10) du scanner multicanaux (5) dont les rayons lumineux ne frappent pas le fuselage de l'avion sont désactivées pour déterminer la position momentanée.

2. Procédé selon la revendication 1,
**caractérisé en ce que**
pour déterminer la position, les scanners multicanaux (5) balaient des sections du fuselage de l'avion qui se chevauchent, au moyen des unités émettrices de lumière (10) et de l'au moins un détecteur (15), de sorte que la position d'une zone balayée peut être mesurée selon des perspectives différentes, afin d'accroître ainsi la précision de la détermination de la position.

3. Procédé selon la revendication 1 ou 2,
**caractérisé en ce que**
dans l'état amarré à l'avion, toutes les unités émettrices de lumière (10) du scanner multicanaux (5) sont activées par l'unité de traitement dans un premier temps, la première unité émettrice de lumière (10), dont le détecteur (15) ne détecte pas le signal de sortie sous forme de signal d'entrée, est tout autant désactivée que l'unité émettrice de lumière (10) du scanner multicanaux (5) supérieur située au-dessus d'elle et que l'unité émettrice de lumière (10) du scanner multicanaux (5) inférieur située en-dessous d'elle.

4. Procédé selon l'une des revendications précédentes
**caractérisé en ce qu'**
à des intervalles de temps déterminés, la dernière unité émettrice de lumière (10) suivant l'unité émettrice de lumière (10) supérieure ou inférieure du scanner multicanaux (5) supérieur ou inférieur, dont l'au moins un détecteur (15) reçoit un signal d'entrée, est activée, où lorsque l'au moins un détecteur (15) reçoit un signal d'entrée en provenance de cette unité émettrice de lumière (10) suivante, l'unité émettrice de lumière (10) respectivement suivante est à nouveau activée.

5. Procédé selon l'une des revendications précédentes
**caractérisé en ce que**
toutes les unités émettrices de lumière (10) et l'au moins un détecteur (15) des au moins deux scanners multicanaux (5) sont actifs pour déterminer la position de référence.
